# EUROPÄISCHE PATENTSCHRIFT

(11) **EP 1 448 721 B1**
(45) Veröffentlichungstag und Bekanntmachung des Hinweises auf die Patenterteilung: **13.04.2016**
(21) Anmeldenummer: 02801849.7
(22) Anmeldetag: 14.10.2002
(51) Int. Cl.: A47J 36/02, F24C 15/00, C09D 7/12, C09D 1/00, C08K 3/14, C08K 3/22, C08K 3/28, C08K 7/24

(54) **KATALYTISCHE BESCHICHTUNG FÜR DIE SELBSTREINIGUNG VON ÖFEN UND HERDEN**
CATALYTIC COATING FOR THE SELF-CLEANING OF OVENS AND RANGES
REVETEMENT CATALYTIQUE POUR L'AUTO-NETTOYAGE DE FOURS ET DE CUISINIERES

(30) Priorität: 15.10.2001 DE 10150825
(43) Veröffentlichungstag der Anmeldung: 25.08.2004
(73) Patentinhaber: BSH Hausgeräte GmbH, 81739 München (DE)
(72) Erfinder: JÖRDENS, Frank, 83278 Traunstein (DE); SALOMON, Jürgen, 83308 Trostberg (DE); SCHMIDMAYER, Gerhard, 83093 Bad Endorf (DE); WALTER, Bernhard, 89182 barnstadt (DE)
(86) Internationale Anmeldenummer: PCT/DE2002/003866
(87) Internationale Veröffentlichungsnummer: WO 2003/035774

(56) Entgegenhaltungen:
- WO-A2-03/027348
- DE-A- 3 019 828
- DE-A- 19 915 378
- US-A- 3 888 790
- US-A- 4 359 039

## Beschreibung

Die vorliegende Erfindung betrifft Koch-, Brat-, Back- und Grillgeräte sowie Teile vondiesen Geräten, insbesondere von Öfen und Herden, die bei ihrem Gebrauch mit Lebensmittelresten verunreinigt werden und deren Oberfläche derart behandelt ist, daß solchen Verunreinigungen besser entgegengewirkt werden kann und die Oberfläche des Geräts bzw. des Geräteteils auch ohne mechanische Reinigung sauber aussieht.

Selbstreinigende Herdbeschichtungen sind aus dem Stand der Technik bereits bekannt. So beschreibt die DE-A 28 28 613 eine selbstreinigende Beschichtung auf Gegenständen, die während ihres Gebrauchs erhitzt werden. Die Beschichtung besteht aus einer porösen Schicht einer Grundmasse eines anorganischen Bindemittels mit einem Mattierungsmittel auf der Oberflächen der Gegenstände, in dieser Schicht verteilten Teilchen eines Katalysators (der dazu neigt, als Ergebnis seiner katalytischen Wirkung seine Farbe zu verändern) und einer sich nicht verfärbenden Substanz. Die katalytische Wirkung wird durch wenigstens eines der Metalloxide Mn₂O₃, MnO₂ oder CuO und/oder durch eine feste Katalysatorsäure, z.B. Zeolith, besorgt. Eine geeignete Gruppe sich nicht verfärbender Substanzen sind demnach Ferrite, als Mattierungsmittel werden z.B. Al₂O₃, SiO₂, TiO₂, ZrO₂, ZnO, CaO oder MgO vorgeschlagen. Genannte anorganische Bindemittel umfassen Fritten aus Borosilikatglas, Phosphat- und Bleifritten und Alkalimetallsilikate.

Eine weitere selbstreinigende Beschichtung ist in der DE-A 29 28 895 beschrieben. Auf dem Gegenstand, der selbstreinigend sein soll, wird ein Überzugsfilm, gebildet aus einer Masse, die einen Oxidationskatalysator, ein synthetisches Silikonharz als Bindemittel und ein organisches Lösungsmittel (LM) enthält, unter Erhitzen der Masse auf 300 bis 400°C ausgebildet. Der Katalysator ist vorzugsweise ein Edelmetall, oder ein Metalloxid oder ein Gemisch von zwei oder mehreren Metalloxiden, insbesondere Pt, Pd oder MnO₂, ein Cu-Oxid, ein Fe-Oxid, ein Ni-Oxid oder ein Cr-Oxid.

Eine einen anorganischen Polymerisationsinhibitor enthaltende Beschichtung zur Erzeugung von selbstreinigenden Oberflächen ist in der DE-C 30 19 828 beschrieben. Die für die Herstellung der Beschichtung nötige Beschichtungsmasse wird in einem flüssigen Bindemittel, das einen Oxidationskatalysator (Metall oder Metalloxid) sowie den genannten Polymerisationsinhibitor enthält, dispergiert. Flüssige Bindemittel sind insbesondere in organischen Lösungsmitteln gelöste Silikonharze. Polymerisationsinhibitoren sind insbesondere AI(OH)3, Sb2O3, Phosphatfrittenmaterial oder ein Gemisch von wenigstens zwei von diesen, und Metalloxide/Metalle sind 5 Oxide von V, Cr, Mo, Mn, Ni und Cu, speziell Mn02, Ni2O3, CuO, oder Pt oder Pd, speziell kolloidales Pt oder Pd auf Al₂O₃.

Eine unangenehme Gerüche und Oberflächenverschmutzungen vermeidende oder vermindernde Beschichtung ist in der DE-A 199 15 378 beschrieben. Die für die Herstellung der Beschichtung nötige Beschichtungsmasse enthält (1) ein Polykondensat aus (a) einem Silan oder einem davon abgeleiteten Oligomeren und (b) gegebenenfalls einer Verbindung von glasbildenden Elementen sowie (2) Teilchen eines Übergangsmetalloxids mit einem Durchmesser von 10 nm bis 20 µm. Bei dem Silan handelt es sich um eine Verbindung der allgemeinen Formel RaSiX(4-a) mit a = 0, 1, 2, 3 oder 4, wobei R ein nicht hydrolysierbarer Rest, X dagegen ein hydrolysierbarer Rest ist; Beispiele für Übergangsmetalloxide sind die Oxide von La, Ce, Ti, Zr, V, Cr, Mo, W, Mn, Fe, Co, Ni, Cu, Ag oder Zn. Bei der Herstellung des Polykondensats oder der Beschichtungsmasse oder danach können der Beschichtungsmasse anorganische Partikel im Nanometer- oder Mikrometer-Maßstab, vor allem in Form eines Sols, zugegeben werden. Bevorzugte anorganische Partikel sind AbO₃, SiO₂, SnO₂, Eisenoxide und C (Graphit, Ruß). Dabei sind die Größenverhältnisse für die nanoskaligen Partikel so, daß dieTeilchengröße (Durchmesser) bei bis zu 300 nm liegt. Bevorzugt sind jedoch bis zu 50 bzw. bis zu 100 nm.

Im Fall der Teilchen im Mikrometermaßstab wird eine Strukturierung der Beschichtung und die Erzeugung von Hohlräumen bewirkt. Der Partikel-Durchmesser liegt in diesem Fall bei 1 bis 500 25 µm. Auch bei diesen Teilchen sind Al_{Z}O₃ und SiO₂ bevorzugt, insbesondere Kieselgur, Aluminiumoxid 90, Kieselgel 40 bzw. 60.

Wenn diese anorganischen Partikel verwendet werden, werden sie mit dem Übergangsmetalloxid imprägniert, was zu einer Verminderung des Porenvolumens der Partikel führt. Bei der 30 beschriebenen Imprägnierung mittels Salzlösung werden innere und äußere Oberflächen beschichtet, was für den Abbau von unangenehmen Gerüchen aufgrund der großen katalytisch aktiven Oberfläche vorteilhaft ist (da Gase im Gegensatz zu öligen Substanzen auch in kleine Poren eindringen können). Für die Vermeidung/Entfernung von Verschmutzungen gilt dies allerdings nicht.

Die US 3,888,790 und WO 03/027348 A2 beschreiben auch Beschichtungen zum Selbstreinigen von Öfen, die eine poröse Struktur aufweisen.

Diese bis heute beschriebenen und kommerziell verfügbaren Möglichkeiten der selbstreinigenden Beschichtungen zeichnen sich alle dahingehend aus, daß ihre Fähigkeit zur Selbstreinigung relativ schnell deutlich abnimmt. Es besteht daher ein Bedarf an besser und länger anhaltend zur Selbstreinigung befähigten Beschichtungen in oder an Koch-, Brat-, Back- und Grillgeräten oder deren Teilen, insbesondere in Öfen und Herden. Ermitteln läßt sich die Qualität und Haltbarkeit der zur Selbstreinigung befähigten Beschichtungen/Schichten von Koch-, Brat-, Back- und Grillgeräten an Hand der DIN ISO 8291 bei einer Schichtstärke von mindestens 150 µm. Die im Stand der Technik bekannten Beschichtungen können 5-10 Zyklen des Auftropfens von Sojaöl und anschließendes Erhitzen auf 250 ± 10°C aushalten, bevor eine Verlackung der Oberfläche (Beurteilung nach DIN ISO 8291 durch Auftreten von Glanz) auftritt. Die Anzahl der Zyklen bei den definierten Bedingungen zu erhöhen ist folglich das wesentliche Ziel, das sich die Erfinder der vorliegenden Erfindung zu erreichen gestellt haben.

Die Erfinder der vorliegenden Erfindung haben nach einem Ausweg aus dieser technisch unbefriedigenden Situation gesucht und sich die Aufgabe gestellt, die Möglichkeit zu schaffen, Teile in oder an Koch-, Brat-, Back- und Grillgeräten, insbesondere in Öfen und Herden, die bei ihrem Gebrauch häufig mit Lebensmittelresten verunreinigt werden, gegenüber dem Stand der Technik derart verändert zu behandeln, daß sie wenigstens 10-15 Zyklen nach DIN ISO 8291 selbstreinigend sind und bleiben, daß also die Verunreinigung durch die Lebensmittelreste, die während des Kochens, Bratens, Backens und Grillens im z.B. Ofen/Herd an den Innenwänden der Muffel auftritt, über einen längeren Zeitraum (bei gleichem und gleich häufigem Gebrauch) ohne mechanische Einwirkung verschwindet und die Backofenmuffel sauberer aussieht als dies bei herkömmlichen Beschichtungen heutzutage der Fall ist.

Ausgehend vom Stand der Technik, der im wesentlichen qualitativ verschiedene Beschichtungsmassen bzw. Beschichtungen beschreibt, haben sich die Erfinder die Frage gestellt, ob es nicht möglich sein könnte, eine Verbesserung auf andere Art zu erreichen. Insbesondere gingen die Überlegungen der Erfinder dahin, die Struktur der Beschichtung dahingehend zu verbessern, daß es dauerhaft einen ausreichenden Kontakt zwischen Lebensmittelrest (nachfolgend vereinfacht als "Verunreinigung" bezeichnet) einerseits und Sauerstoff und (z.B. oxidischer) Festphase (Dreiphasengrenze) andererseits gibt. Dies kann dadurch ermöglicht werden, daß ganz spezielle Hohlräume zur Verfuegung gestellt werden, von denen mindestens eine Sorte zum Spreiten/Aufsaugen der beweglichen Lebensmittelreste und mindestens eine andere Sorte als Sauerstoffreservoir fungiert, in die die Lebensmittelreste aber nicht eindringen können. Auf diese Art wird die Fläche, an der der (thermische bzw. oxidative) Abbau stattfindet, maximiert, da in der Schicht selbst dauerhaft Sauerstoff vorhanden ist und der Abbau nicht ausschließlich auf Sauerstoffzufuhr von der Oberfläche und den Seiten angewiesen ist. Ein Verschließen der Oberfläche durch große Mengen an Lebensmittel führt daher nicht zur Blockade des Abbaus innerhalb der gesamten Schicht.

Weiterhin von Bedeutung ist, daß die Oberfläche des Koch-, Brat-, Back- oder Grillgerätes bzw. seiner Teile mechanisch belastbar bleibt, das heißt, die Haftung der Beschichtung auf ihrem Substrat, ihre Schlagfestigkeit, ihre chemische Beständigkeit, ihre Beständigkeit gegenüber Temperaturwechseln sowie ihre Kratzfestigkeit müssen zufriedenstellend sein, was erfindungsgemäß erreicht wird.

Gemäß vorliegender Erfindung wird unter Verunreinigung bzw. Lebensmittelrest ein Lebensmittelrest verstanden, der bei den Betriebstemperaturen des Koch-, Brat-, Back- und Grillgerätes flüssig genug ist, in die Struktur der selbstreinigenden Beschichtung einzudringen. Dabei kann es sich um bei den Betriebstemperaturen flüssige Fette/Öle, wäßrige Phasen (z.B. Salzlösungen) und mit diesen vermischte Kohlenhydrate/Eiweiße handeln.

Die gestellte Aufgabe haben die Erfinder der vorliegenden Erfindung dadurch gelöst, daß sie Beschichtungen mit thermisch (dauerhaft bis 500°C) und chemisch stabilen, porösen Oxiden, insbesondere Metalloxiden, aber auch solch stabilen Carbiden und Nitriden entwickelt haben.

Offensichtlich ist der thermische Abbau und damit die selbstreinigende Kraft der heute üblichen Beschichtungen von Teilen an bzw. in Koch-, Brat-, Back- oder Grillgeräten deshalb begrenzt, weil die Lebensmittelreste an der Festphase nicht mit genügend Sauerstoff in Kontakt kommen, der für den Abbau der Verunreinigungen zu (idealerweise) CO₂ und H₂O nötig ist. Die Erfinder haben deshalb Schichten mit Strukturen zur Verfügung gestellt, in die die Verunreinigungen eindringen, in denen sie gespreitet und im Idealfall vollständig zu CO₂ und H₂O abgebaut werden können.

Nachfolgend wird die Struktur der Beschichtung gemäß der vorliegenden Erfindung näher beschrieben. Dabei werden die Begriffe *"Teilchen"* und "*Partikel*" synonym verwendet. Wenn von der Größe der Teilchen gesprochen wird, ist ihr Durchmesser gemeint.

Die zu erzeugende Beschichtung mit der Fähigkeit zur Selbstreinigung besteht aus wenigstens einer Sorte von Teilchen A mit offener Porosität. Die Größe der Teilchen beträgt 5 bis 100 µm. Bevorzugte Größen liegen bei 10 bis 80 µm, bei 20 bis 60 µm sowie bei 30 bis 50 µm. Die Poren a in den Teilchen A sind in einer Größenordnung von a ≧ 1 µm. Die Teilchen A sind mit einer porösen Membran (Poren c) umhüllt. Diese Membran verhindert das Eindringen von Verunreinigungen in die porösen Teilchen A. Sie stellt aber auch die sogenannte Bindephase dar, gewährleistet also die Bindung der Teilchen A untereinander und zum Substrat (zur Oberfläche).

Chemisch gesprochen sind die Partikel A, wie oben erwähnt, thermisch und chemisch stabile, poröse Oxide, insbesondere Metalloxide, Carbide oder Nitride. Beispielhafte Vertreter sind die weiter unten für die Partikel B aufgeführten Substanzen. Besonders bevorzugt als Partikel A sind jedoch γ-Al₂O₃ und SiO₂.

Die Zwischenräume zwischen den Teilchen A (nachfolgend bezeichnet als Poren b) sind für das Eindringen und Spreiten der flüssigen Lebensmittelreste in die Schicht verantwortlich. Ziel ist eine möglichst gute Verteilung/Spreitung der Verunreinigungen in der Schicht, um die Angriffsfläche für den thermischen Abbau zu maximieren. Die Größenverteilung der Poren b wird im Wesentlichen von der Größe der Teilchen A und dem Volumenanteil ihrer Bindephase bestimmt. Die Menge des zu verwendenden Binders läßt sich durch Routineversuche leicht ermitteln, wenn berücksichtigt wird, daß die erfindungsgemäß vorteilhafteste Menge so groß ist, daß einerseits das Spreiten in den Poren b und andererseits eine ausreichende Qualität der mechanischen Eigenschaften (Kratzfestigkeit, Haftung auf dem Substrat) der Beschichtung gewährleistet sind. Der Volumenanteil der Bindephase liegt erfindungsgemäß bei 5-40%, vorzugsweise bei 20-30% oder 15-25%.

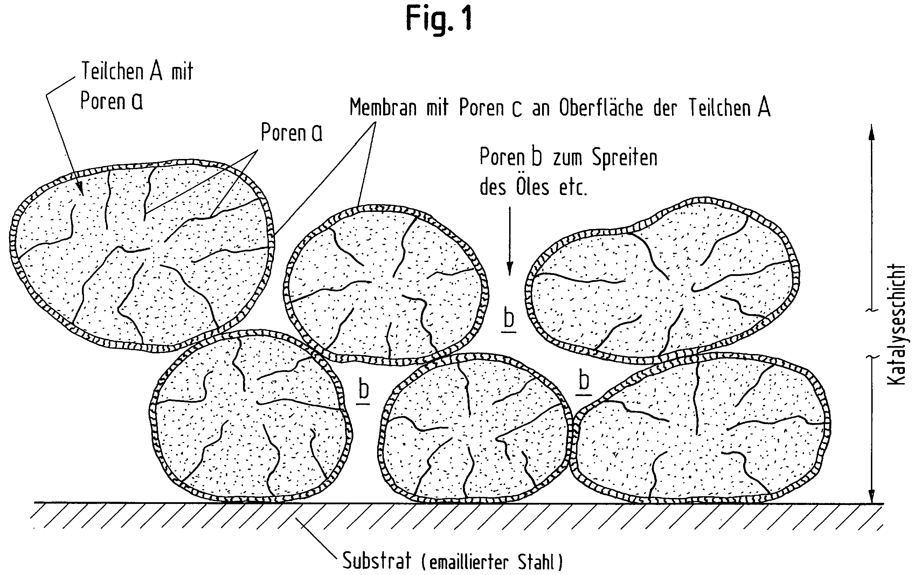

Die Poren b zwischen den Teilchen A sind deutlich größer als die Poren a, so daß Verunreinigungen in die Struktur eindringen und spreiten können. Auf diese Weise ist gewährleistet, daß immer (genug) Sauerstoff für den thermischen Abbau in Kontakt mit den zu entfernenden Verunreinigungen ist, insbesondere da sich die Poren a immer wieder regenerieren, d.h., Luft aufnehmen können. Figur 1 zeigt den hier beschriebenen Aufbau der Teilchen, Beschichtung und Poren.

Alle erfindungsgemäß genannten Porensysteme, d.h. die Poren a und b, aber auch die Poren des Binders, sofern vorhanden, liegen offenporös vor.

Die Beschichtungsmasse, die die Grundlage für die erfindungsgemäß zu erzeugende Beschichtung darstellt, kann aber noch weitere Sorten von Teilchen enthalten, die (a) der Verringerung der Rauheit der Beschichtung und der Verbesserung der Haptik, (b) der Verbesserung der Bindung einerseits zwischen den Teilchen A und andererseits zwischen Beschichtung und Substrat, (c) der Einstellung der Farbe oder (d) der Verbesserung des thermischen Abbaus oder des Spreitungsvermögens (um nur einige Beispiele zu nennen) dienen.

Beispiele für Teilchen, die unter (a), aber auch (b) fallen, sind nanoskalige Teilchen (Partikel B'), Teilchen im Mikrometer-Bereich (Partikel B) sowie Farbkörper-Teilchen (z.B. Spinelle), ein Beispiel zu (c) sind Spinelle, und schließlich sind Oxide von Übergangsmetallen (La, Ce, Ti, V, Cr, Mo, W, Mn, Fe, Co, Ni, Cu, Ag oder Zn) ein Beispiel zu (d).

Im Fall der Teilchen B und B' ist deren chemische Zusammensetzung nicht weiter von Bedeutung. Entscheidend ist allein, daß die Teilchen, wie oben beschrieben, thermisch und chemisch stabil sind. Sie dürfen, müssen allerdings nicht, porös sein. Geeignete Substanzen als nanoskalige bzw. Mikrometer-Partikel sind Oxide, speziell Metalloxide, Carbide und Nitride, zum Beispiel SiO₂, TiO₂, Al₂O₃, ZrO₂, SiC, Si₃N₄ und B₂O₃, insbesondere α-Al₂O₃. Die Wahl der stofflichen Zusammensetzung der Partikel B und B' ist nicht abhängig von der chemischen Zusammensetzung der Partikel A. Das heißt, wenn die Partikel A erfindungsgemäß bevorzugt Al₂O₃ sind, können die Partikel B bzw. B' ebenfalls Al₂O₃, genauso gut aber auch SiO₂, TiO₂, Zr02, SiC, Si₃N₄, B₂O₃ oder ein Spinell (oder eine andere stabile Komponente) sein.

Von Bedeutung sind hingegen die Größenordnungen der Partikel B undB'. Die nanoskaligen Partikel B' haben einen Durchmesser von bis zu 100 nm, sind vorteilhafterweise aber nur 20 bis 60 nm. Die Partikel im Mikrometer-Bereich haben stattdessen einen Durchmesser von 0,5 bis 10 µm, wobei für diese Teilchen B die zusätzliche Einschränkung gilt, daß sie mindestens fünfmal, höchstens aber zwanzigmal kleiner sind als die Teilchen A.

Gemäß einer ganz besonders bevorzugten Ausführungsform sind die Poren a frei von festen oder flüssigen Zweitphasen. Dies gilt für die Zeit des Gebrauchs des Koch-, Brat-, Back- und Grillgerätes, aber auch für das unbenutzte Gerät. Mit anderen Worten, es ist besonders bevorzugt, daß die Poren a kein Metalloxid, keinen Farbkörper, keine Partikel B oder B' und auch keine Verunreinigungen aufnehmen bzw. aufweisen. Demnach sind die Poren a erfindungsgemäß entweder genügend klein, so daß Verunreinigungen beim Gebrauch des Gerätes einerseits und Metalloxid, Farbkörper, Partikel B oder B' etc. bei der Herstellung der Beschichtung andererseits nicht in die Poren a eindringen können, oder mittels der oben beschriebenen porösen Membran (Poren c) am Eindringen in die Poren a gehindert werden. Durch diese Struktur steht für den thermischen Abbau der Verunreinigungen neben dem Luftsauerstoff in den Poren b insbesondere auch der Luftsauerstoff der Poren a zur Verfügung.

Die oben schon genannte poröse Membran ist ein poröser Kleber (nachfolgend auch als poröser Binder bezeichnet) bzw. besteht aus einem solchen. Dabei handelt es sich um einen anorganischen temperaturbeständigen Binder, vorzugsweise um ein anorganisches Polymer (z.B. Silikonharze und polymere Phosphate) oder um ein anorganisches Sol, beide auf der Basis von z.B. Al₂O₃, SiO₂, TiO₂, ZrO₂, P₂O₅, SiC, Si₃N₄ oder B₂O₃ oder Gemischen von diesen.

Weitere Beispiele für den Kleber/Binder sind Glas (z.B. offenzelliges, aber auch dichtes Glas), das nur bis zu seinem Erweichungspunkt (T_{E}) bzw. auf eine Temperatur etwas unterhalb T_{E} erhitzt worden ist, und Silikate wie Tone oder Wasserglas.

Die Größe der Binder-Partikel beträgt im Fall eines Sols bekannterweise 100 nm oder weniger, wobei der Durchmesser der Teilchen 5 bis 100 nm, vorzugsweise 20 bis 80 nm sein kann. Im Fall, daß ein Binder auf Basis von Glas oder Ton etc. verwendet wird, sind Durchmesser von 0,5 bis 10 µm, insbesondere 1 bis 5 µm erfindungsgemäß bevorzugt.

Gemäß einer bevorzugten Ausführungsform weist die Beschichtung bzw. die Beschichtungsmasse einen üblichen Metall- bzw. Metalloxid-Katalysator (Oxidationskatalysator und/oder Polymerisationsinhibitor) auf. Gemäß der vorliegenden Erfindung sind grundsätzlich alle im Stand der Technik für die Selbstreinigung von Backöfen beschriebenen Katalysatoren geeignet. In diesem Zusammenhang wird verwiesen auf die einleitend zitierten Druckschriften. Erfindungsgemäß bevorzugt ist die Verwendung von Oxiden von La, Ce, Ti, V, Cr, Mo, W, Mn, Fe, Co, Ni, Cu, Ag oder Zn, speziell MnO₂, Ni₂O₃, CuO oder Cr₂O₃, aber auch die von Pt und Pd. Auch beliebige Gemische der genannten Oxide sind erfindungsgemäß als Oxidationskatalysator/Polymerisationsinhibitor geeignet.

Das Metalloxid bzw. das Gemisch der Metalloxide weist Partikelgrößen von unter 100 nm bis zu 0,5, 1 oder sogar 2 µm auf. Gemäß einer bevorzugten Ausführungsform der vorliegenden Erfindung weist der Katalysator jedoch Teilchendurchmesser von deutlich unter 1 µm auf. Der Teilchendurchmesser beträgt vorzugsweise 500 nm oder weniger, 300 µm oder weniger, 200 nm oder weniger und besonders bevorzugterweise 100 nm oder weniger.

Eine weiterhin bevorzugte Ausführungsform der vorliegenden erfindung besteht darin, dem Katalysator eine oder mehrere Substanzen zuzusetzen, die die Temperatur, bei der der Katalysator eine gute Umsatzrate aufweist, auf Temperaturen von 200 bis 250°C senkt/senken. Substanzen im Sinne dieser bevorzugten Ausgestaltung sind Elemente der 1. und 2. Hauptgruppe des PSE, das heißt z.B. Natrium, Kalium, Magnesium, Calcium oder Strontium.

Die erfindungsgemäße Beschichtungsmasse enthält gemäß einer weiterhin bevorzugten Ausführungsform einen anorganischen Farbkörper bzw. ein sich nicht verfärbendes Material, der/das dafür Sorge trägt, daß eventuell auftretende Farbänderungen in Folge eines Wertigkeitswechsels des Metalls des Katalysators überdeckt werden.

Geeignete anorganische Farbkörper sind insbesondere Spinelle wie MgAl₂O₄, MgFe₂O₄, MnFe₂O₄, FeAl₂O₄, NiAl₂O₄ oder MgCr₂O₄. Andere geeignete sich nicht verfärbende Materialien sind SiC und Graphit. Der Teilchendurchmesser der optional verwendeten Farbkörper beträgt 0,2 bis 5 µm, vorzugsweise 0,5 bis 3 µm.

Gemäß einer weiterhin bevorzugten Ausführungsform weist die Beschichtung optische Sprenklungen oder Granitierungen auf, um eventuelle optische Verschmutzungen zu kaschieren. In ersterem Fall wird nur eine Farbkomponente, im Fall der Granitierung werden wenigstens zwei Farbkomponenten verwendet. Geeignete Farbkomponenten sind z.B. Spinelle, aber auch Al₂O₃, TiO₂, ZrO₂ und Gemische von diesen. Der Durchmesser dieser Komponenten liegt bei 50 bis 2000 µm.

Gemäß einer anderen bevorzugten Ausführungsform werden als Partikel A SiO₂, als Partikel B α-Al₂O₃, ein nanoskaliger Sol-Gel-Binder auf der Basis von TiO₂ bzw. TiOₓ, als Farbkörper ein Spinell (MnFe₂O₄) mit einem Durchmesser von 1-3 µm und als Sprenkelung TiO₂ einer Größe von 500-1000 µm verwendet. Die Partikel A weisen eine Größe von 30-50 µm auf und werden in einer Menge von 50-80, insbesondere 60-70 Gew.-% eingesetzt. Die Partikel B weisen dagegen eine Größe von 0,7-1 µm auf und werden in einer Menge von 10-20 Gew.-%, speziell 15-20 Gew.-%, eingesetzt. Der Sol-Gel-Binder macht 7-15 Gew.-%, speziell 10 Gew.-% aus, der Farbkörper und die Sprenkelung machen jeweils 1-3 Gew.-% aus, wobei 2 und 1 Gew.-% besonders vorteilhafte Werte sind.

Erfindungsgemäß beträgt die Dicke der Beschichtung wenigstens 50 µm, vorzugsweise 100 bis 500 µm, besonders bevorzugt sind jedoch Dicken von 150 bis 450 µm, speziell von 200 bis 400 µm oder 250 bis 350 µm. Größere Schichtdicken sind zwar technisch realisierbar und auch sinnvoll, aus wirtschaftlichen Gründen jedoch wenig interessant. Beträgt die Dicke der Beschichtung hingegen weniger als 50 µm, bietet diese kein genügend großes Porenvolumen der Poren a, b und ggf. c für die Aufnahme von einerseits Verunreinigungen (nur in Poren b) und andererseits Luft (in Poren a, b, c).

Teile von bzw. in Koch-, Brat-, Back- oder Grillgeräten im Sinn der vorliegenden Erfindung sind nicht nur Einhänge- und Einschubteile für Ofen und Herd, sondern auch die Innenseiten von Backofenmuffeln, also der Ofen- oder Herdinnenraum (Backraum), und Friteusen, grundsätzlich alle Metall-, Glas-, mit Metall beschichteten oder emaillierten Teile von Geräten wie Öfen, Herden, Grills etc., die bei Gebrauch direkt oder indirekt erhitzt werden und nicht in direktem Kontakt mit dem Gargut stehen.

Gemäß einer bevorzugten Variante der Erfindung handelt es sich bei dem zu beschichtenden Teil um emaillierte Teile, z.B. emaillierten Stahl, das ist ein Stahl, der mit einer Emailschicht einer Dicke in der Größenordnung von 100 µm, die dem Korrosionsschutz dient. versehen ist.

Für die Herstellung der erfindungsgemäßen selbstreinigenden Beschichtung bieten sich insbesondere drei Varianten an. Erfindungsgemäß ist es dabei bevorzugt, daß die Poren a frei bleiben von jeglicher Festphase und somit maximale Aufnahmekapazität für Luft haben. Dies läßt sich insbesondere dadurch erreichen, daß die verwendeten Teilchen (Farbkörper, Teilchen B und B', Metalloxid etc.) nicht wesentlich kleiner sind als die Poren a. Eine weitere Möglichkeit, die Poren a von Festphase freizuhalten, besteht darin, partikuläre Systeme zu verwenden. Auf Grund ihres Zeta-Potentials dringen die Teilchen nicht in die Poren ein, obwohl bzw. auch wenn letztere deutlich größer sind als die Teilchen.

Nachfolgend sollen die 3 verschiedenen Herstellungsverfahren kurz beschrieben werden.

Bei dem ersten Verfahren werden die Partikel A (z.B. Al₂O₃) mit einem wäßrig oder organisch (alkoholisch) dispergierten Binder (der Binder darf keinesfalls gelöst vorliegen, da in diesem Fall die Poren a der Partikel A mit fester Phase gefüllt würden! Dasselbe gilt für alle optional verwendeten/verwendbaren Komponenten) und optional mit (a) Teilchen B und/oder B' sowie (b) anorganischem Farbkörper (z.B. einem Spinell) und/oder (c) einem und/oder weiteren Additiven zu einem Schlicker aufbereitet, der auf die zu beschichtende Oberfläche aufgebracht und dort zu einem sogenannten Biskuit getrocknet wird. Dann erfolgt ein Einbrand bei 500 bis 800°C und ein Abkühlungsschritt, an den sich ggf. ein Aufspritzen des z.B. Metalloxid-Katalysators (MeO oder Me₂O) z.B. in Form einer (partikulären) Dispersion von Metalloxid oder Metallhydroxid oder Metalloxyhydroxid (z.B. Me₂O(OH)₂) anschließt. Das Entfernen des LMs und das optionale Überführen der Salze in die Oxidform erfolgt thermisch.

Bei einer zweiten Variante der Herstellung der Beschichtung vermischt man ggf. zunächst die Partikel A mit partikulärem Metalloxid, Metallhydroxid oder Metalloxyhydroxid bzw. mit Teilchen B und/oder B'. Nachfolgend wird das Gemisch getrocknet und calciniert, woraufhin ein Pulver, das ggf. MeO oder Me₂O enthält, erhalten wird. Dieses Pulver wird dann wie in der ersten Variante mit einem wäßrig oder organisch (alkoholisch) dispergierten Binder (es darf keine Lösung sein) und ggf. einem anorganischen Farbkörper (z.B. einem Spinell) und weiteren Additiven zu einem Schlicker aufbereitet, der auf die zu beschichtende Oberfläche aufgetragen und dort zum Biskuit getrocknet wird. Dann erfolgt ein Einbrand bei 500 bis 800°C, bei dem die Schicht verfestigt wird und ggf. flüchtige Bestandteile der Bindephase ausgetrieben werden.

Die dritte Variante entspricht schließlich Variante 2, mit der Einschränkung, daß die Partikel A mit einem organischen Polymer (z.B. Cellulose) beschichtet bzw. versiegelt werden, so daß sie anschließend mit einer Lösung eines Metallnitrats in Kontakt gebracht werden können, ohne daß die Poren a mit Metallnitrat (nach dem Einbrand mit Metalloxid) oder anderen Schlickerkomponenten angefüllt sind. Durch das Erhitzen wird nicht nur das Metallnitrat in Metalloxid überführt, vielmehr wird auch die Cellulose pyrolysiert. Die weiteren Schritte sind identisch denen von Variante 2, d.h., mit dispergiertem Binder wird ein Schlicker bereitet.

In allen drei Varianten kann das Aufbringen des Schlickers elektrophoretisch, mittels SpritzVerfahren oder durch Eintauchen erfolgen.

Erfolgt der Einbrand bei Temperaturen deutlich oberhalb 500°C und handelt es sich bei dem zu beschichtenden Teil z.B. um emaillierten Stahl, erweicht das Email, so daß unter Einsinken der Schicht eine verbesserte Haftung zwischen Substrat und Beschichtung erzielt wird.

## Patentansprüche

1. Teil an bzw. in einem Koch-, Brat-, Back- oder Grillgerät mit einer selbstreinigenden Beschichtung, durch die Lebensmittelreste ohne mechanische Einwirkung entfernt werden, wobei die Beschichtung eine poröse Struktur aus (a) porösen Teilchen A und (b) einem Binder aufweist, wobei die porösen Teilchen A in ihren Poren a keine feste oder flüssige Zweitphase aus z.B. Lebensmittelresten aufweisen, wobei die Größe der Teilchen A (Teilchendurchmesser) 5 bis 100 µm beträgt, wobei in den Zwischenräumen zwischen den Teilchen A Poren b ausgebildet werden, die für das Eindringen und Spreiten der Lebensmittelreste in die Beschichtung verantwortlich sind, wobei die Gröβe der Poren a (Porendurchmesser) ≥ 1 µm ist und die Teilchen A mit einer porösen Membran umhüllt sind, die die Binderphase darstellt, und die Poren b ausbildet, die verhindern, dass die Lebensmittelreste in die Poren a eindringen können.

2. Teil nach Anspruch 1, **dadurch gekennzeichnet, dass** die porösen Teilchen A thermisch stabile und chemisch stabile, poröse Metalloxide, Carbide oder Nitride sind.

3. Teil nach Anspruch 1 oder 2, **dadurch gekennzeichnet, dass** die porösen Teilchen A SiO₂, TiO₂, Al₂O₃, ZrO₂, SiC, Si₃N₄, C und B₂O₃ sind.

4. Teil nach Anspruch 3, **dadurch gekennzeichnet, dass** die Größe der Teilchen A (Teilchendurchmesser) 10 bis 80 µm beträgt.

5. Teil nach Anspruch 4, **dadurch gekennzeichnet, dass** die Größe der Teilchen A (Teilchendurchmesser) 20 bis 60 µm beträgt.

6. Teil nach Anspruch 5, **dadurch gekennzeichnet, dass** die Größe der Teilchen A (Teilchendurchmesser) 30 bis 50 µm beträgt.

7. Teil nach einem der vorhergehenden Ansprüche, **dadurch gekennzeichnet, dass** die Poren a der Teilchen A offenzellig sind

8. Teil nach einem der vorhergehenden Ansprüche, **dadurch gekennzeichnet, dass** der Binder anorganisch und dauerhaft bis 500°C temperaturbeständig ist.

9. Teil nach Anspruch 8. **dadurch gekennzeichnet, dass** der Binder ein anorganisches Poymer wie ein Silikonharz oder ein anorganisches Sol, beide auf der Basis von Al₂O₃, SiO₂, TiO₂, ZrO₂, SiC, Si₃N₄ oder B₂O₃ oder Gemischen von wenigsten zwei von diesen, ein offenzelliges oder dichtes Glas, ein polymeres Phosphat, ein Silikat, ein Ton oder Wasserglas ist.

10. Teil nach einem der vorgehenden Ansprüche, **dadurch gekennzeichnet, dass** die Binder-Partikel einen Durchmesser von 0,5 bis 10 µm aufweisen.

11. Teil nach Anspruch 10, **dadurch gekennzeichnet, dass** die Binder-Partikel einen Durchmesser von 1 bis 5 µm aufweisen.

12. Teil nach einem der vorhergehenden Ansprüche, **dadurch gekennzeichnet, dass** die Beschichtung zusätzlich andere Sorten von Teilchen enthält, die der Verringerung der Rauheit der Beschichtung, der Verbesserung der Bindung einerseits zwischen den Teilchen A und andererseits zwischen Beschichtung und Substrat, der Einstellung der Farbe oder der Verbesserung des thermischen Abbaus, der Haptik oder des Spreitungsvermögens dienen.

13. Teil nach Anspruch 12, **dadurch gekennzeichnet, dass** die anderen Sorten von Teilchen nanoskalige Teilchen (Partikel B'), Teilchen im Mikrometer-Bereich (Partikel B), Farbkörper-Teilchen oder Metalle sind.

14. Teil nach Anspruch 13, **dadurch gekennzeichnet, dass** die anderen Sorten von Teilchen Übergangsmetalle oder Metalloxide sind.

15. Teil nach Anspruch 14, **dadurch gekennzeichnet, dass** die anderen Sorten von Teilchen Metalloxide von Übergangsmetallen sind.

16. Teil nach einem der vorhergehenden Ansprüche, **dadurch gekennzeichnet, dass** die Teilchen B und B' thermisch und chemisch stabil sind.

17. Teil nach Anspruch 16, **dadurch gekennzeichnet, dass** die Teilchen Metalloxide, Carbide und Nitride wie SiO₂, TiO₂, Al₂O₃, ZrO₂, SiC, Si₃N₄, C und B₂O₃ sind.

18. Teil nach einem der vorhergehenden Ansprüche, **dadurch gekennzeichnet, dass** das Teil eine Backofenmuffel ist.

19. Koch-, Brat-, Back- und Grillgerät, insbesondere ein Ofen oder Herd, das ein Teil nach einem der Ansprüche 1 bis 18 aufweist.

## Claims

1. Part on or in a cooking, roasting, baking or grilling device having a self-cleaning coating, by means of which food residues are removed without mechanical force, wherein the coating has a porous structure made of (a) porous particles A and (b) a binder, wherein in their pores a the porous particles A do not have a solid or liquid second phase made of e.g. food residues, wherein the size of the particles A (particle diameter) amounts to 5 to 100 µm, wherein pores b are embodied in the spaces between the particles A, said pores b being responsible for penetrating and spreading the food residues into the coating, wherein the size of the pores a (pore diameter) ≥ 1 µm and the particles A are wrapped with a porous membrane, which represents the binder phase, and embodies the pores b to prevent food residues from being able to penetrate the pores a.

2. Part according to claim 1, **characterised in that** the porous particles A are thermally stable and chemically stable, porous metal oxide, carbide or nitride.

3. Part according to claim 1 or 2, **characterised in that** the porous particles A are *Si0*₂, *TiO*₂, *AI*₂*O*₃, *ZrO*₂, SiC, *Si*₃*N*₄, C and *B*₂*O*₃.

4. Part according to claim 3, **characterised in that** the size of the particles A (particle diameter) amounts to 10 to 80 µm.

5. Part according to claim 4, **characterised in that** the size of the particles A (particle diameter) amounts to 20 to 60 µm.

6. Part according to claim 5, **characterised in that** the size of the particles A (particle diameter) amounts to 30 to 50 µm.

7. Part according to one of the preceding claims, **characterised in that** the pores a of the particles A are open-celled.

8. Part according to one of the preceding claims, **characterised in that** the binder is inorganic and durably temperature-resistant up to 500°C.

9. Part according to claim 8, **characterised in that** the binder is an inorganic polymer such as silicon resin or an inorganic sol, both on the basis of *AI*₂*O*₃, *SiO*₂, *TiO*₂, *ZrO*₂, SiC, *Si*₃*N*₄, or *B*₂*O*₃ or mixtures of at least two of these, an open-celled or sealed glass, a polymer phosphate, a silicate, a clay or soluble glass.

10. Part according to one of the preceding claims, **characterised in that** the binder particles have a diameter of 0.5 to 10 µm.

11. Part according to claim 10, **characterised in that** the binder particles have a diameter of 1 to 5 µm.

12. Part according to one of the preceding claims, **characterised in that** the coating also contains other types of particles, which serve to reduce the rawness of the coating, to improve the binding on the one hand between the particles A and on the other hand between the coating and the substrate, to adjust the colour or to improve the thermal degradation, surface feel or the spreading ability.

13. Part according to claim 12, **characterised in that** the other types of particles are nanoscale particles (particle B'), particles in the micrometer range (particle B), coloured pigment particles or metals.

14. Part according to claim 13, **characterised in that** the other types of particles are transition metals or metal oxides.

15. Part according to claim 14, **characterised in that** the other types of particles are metal oxides of transition metals.

16. Part according to one of the preceding claims, **characterised in that** the particles B and B' are thermally and chemically stable.

17. Part according to claim 16, **characterised in that** the particles are metal oxide, carbide, nitride such as *SiO*₂, *TiO*₂, *AI*₂*O*₃, *ZrO*₂, SiC, *Si*₃*N*₄, C and *B*₂O₃.

18. Part according to one of the preceding claims, **characterised in that** the part is a baking oven muffle.

19. Cooking, roasting, baking and grilling device, in particular an oven or range, which has a part according to one of claims 1 to 18.

## Revendications

1. Pièce sur resp. dans un appareil de cuisson, de rôtisserie, de cuisson ou four ou au grill, comprenant un revêtement autonettoyant au moyen duquel les restes d'aliments sont retirés sans action mécanique, le revêtement présentant une structure poreuse composée (a) de particules poreuses A et (b) d'un liant, les particules poreuses A ne présentant dans leurs pores a aucune deuxième phase solide ou liquide constituée, par ex., de restes d'aliments, la taille des particules A (diamètre des particules) étant de 5 à 100 µm, des pores b étant formés dans les espaces intermédiaires entre les particules A, lesquels sont responsables pour la pénétration et l'étalement des restes d'aliments dans le revêtement, la taille des pores a (diamètre des pores) étant 1 µm et les particules A étant entourées d'une membrane poreuse qui représente la phase liante et forme les pores b qui empêchent que les restes d'aliments puissent pénétrer dans les pores a.

2. Pièce selon la revendication 1, **caractérisée en ce que** les particules poreuses A sont des oxydes métalliques poreux, des carbures ou des nitrures thermiquement stables et chimiquement stables.

3. Pièce selon la revendication 1 ou 2, **caractérisée en ce que** les particules poreuses A sont SiO₂, TiO₂, Al₂O₃, ZrO₂, SiC, Si₃N₄, C et B₂O₃.

4. Pièce selon la revendication 3, **caractérisée en ce que** la taille des particules A (diamètre des particules) est de 10 à 80 µm.

5. Pièce selon la revendication 4, **caractérisée en ce que** la taille des particules A (diamètre des particules) est de 20 à 60 µm.

6. Pièce selon la revendication 4, **caractérisée en ce que** la taille des particules A (diamètre des particules) est de 30 à 50 µm.

7. Pièce selon l'une quelconque des revendications précédentes, **caractérisée en ce que** les pores a des particules A sont à cellules ouvertes.

8. Pièce selon l'une quelconque des revendications précédentes, **caractérisée en ce que** le liant est anorganique et résistant à la température de manière durable jusqu'à 500 °C.

9. Pièce selon la revendication 8, **caractérisée en ce que** le liant est un polymère anorganique, tel qu'une résine de silicone ou un sol anorganique, les deux sur la base de Al₂O₃, SiO₂, TiO₂, ZrO₂,SiC, Si₃N₄, ou B₂O₃ ou de mélanges d'au moins deux de ceux-ci, un verre à cellule ouverte ou épais, un phosphate polymère, un silicate, un argile ou du verre soluble.

10. Pièce selon l'une quelconque des revendications précédentes, **caractérisée en ce que** les particules de liant présentent un diamètre de 0,5 à 10 µm.

11. Pièce selon la revendication 10, **caractérisée en ce que** les particules de liant présentent un diamètre de 1 à 5 µm.

12. Pièce selon l'une quelconque des revendications précédentes, **caractérisée en ce que** le revêtement contient en outre d'autres sortes de particules servant à la diminution de la rugosité du revêtement, à l'amélioration de la liaison d'une part entre les particules A et d'autre part entre le revêtement et le substrat, au réglage de la couleur ou à l'amélioration de la dégradation thermique, à l'haptique ou au pouvoir d'étalement.

13. Pièce selon la revendication 12, **caractérisée en ce que** les autres sortes de particules sont des particules à l'échelle nanométrique (particules B'), des particules situées dans la plage du micromètre (particules B), des particules à corps coloré ou des métaux.

14. Pièce selon la revendication 13, **caractérisée en ce que** les autres sortes de particules sont des métaux de transition ou des oxydes métalliques.

15. Pièce selon la revendication 14, **caractérisée en ce que** les autres sortes de particules sont des oxydes métalliques de métaux de transition.

16. Pièce selon l'une quelconque des revendications précédentes, **caractérisée en ce que** les particules B et B' sont thermiquement et chimiquement stables.

17. Pièce selon la revendication 16, **caractérisée en ce que** les particules sont des oxydes métalliques, des carbures ou des nitrures, tels que SiO₂, TiO₂, Al₂O₃, ZrO₂, SiC, Si₃N₄, C et B₂0₃.

18. Pièce selon l'une quelconque des revendications précédentes, **caractérisée en ce que** la pièce est un moufle de four.

19. Appareil de cuisson, de cuisson au four et au grill, notamment un four ou une cuisinière qui présente une pièce selon l'une quelconque des revendications 1 à 18.
